# EUROPÄISCHE PATENTSCHRIFT

(11) **EP 1 422 800 B1**
(45) Veröffentlichungstag und Bekanntmachung des Hinweises auf die Patenterteilung: **16.04.2008**
(21) Anmeldenummer: 02406017.0
(22) Anmeldetag: 25.11.2002
(51) Int. Cl.: H02G 3/08, H02G 3/10

(54) **Geräteträger zur Befestigung von Geräten auf eine aussen oder innen isolierte Gebäudefassade oder Gebäudemauer**
Support for mounting of apparatus on an inwardly or outwardly insulated panel or wall
Support pour la montage de dispositifs sur une façade ou un mur qui est isolé à l'extérieur ou à l'intérieur

(43) Veröffentlichungstag der Anmeldung: 26.05.2004
(73) Patentinhaber: AGRO AG, CH-5502 Hunzenschwil (CH)
(72) Erfinder: Lehmann, Christoph, 5634 Merenschwand (CH); Andermatt, Urs, 5105 Auenstein (CH)
(74) Vertreter: Groner, Manfred

(56) Entgegenhaltungen:
- DE-A- 19 716 906
- US-A- 3 525 450
- US-A- 3 651 245
- US-A- 4 634 015

## Beschreibung

Die Erfindung betrifft einen Geräteträger nach dem Oberbegriff des Anspruchs 1.

Die FR-A-2 740 623 offenbart einen Geräteträger nach dem Oberbegriff des Anspruchs 1. Der Träger ist bei diesem Geräteträger rohrförmig ausgebildet und besitzt seitlich eine Öffnung für eine Leitungsdurchrührung. An einem Ende ist der Träger auf ein Basiselement aufgesteckt und das andere Ende besitzt eine Öffnung zur Aufnahme eines Gerätes.

Ein Geräteträger dieser Art ist im Stand der Technik aus der EP 0 710 751 B1 des Anmelders bekannt geworden. Zur Befestigung des Geräteträgers weist dieser ein plattenförmiges Basiselement auf, an dem mittig ein Träger angeformt ist. Dieser Träger besitzt eine prismatische Form und bildet mit einem entsprechenden prismatischen Ansatz einer Trägerplatte eine teleskopische Führung. Zur Anpassung an die Dicke einer Dämmplatte kann der Abstand zwischen dem Basiselement und der Verankerungsplatte stufenlos eingestellt werden. Dieser Geräteträger dient insbesondere zur Verankerung von Schaltern, Steckdosen und dgl. Diese werden auf der Verankerungsplatte befestigt, beispielsweise angeschraubt. In der Praxis hat sich dieser Geräteträger für Platten mit einer Dicke bis etwa 160 mm an sich bewährt.

Für die Isolation von Gebäuden werden zunehmend Isolationen verwendet, die wesentlich über die genannte Dicke von 160 mm hinausgehen. Zudem besteht häufig der Bedarf, vergleichsweise schwere Geräte, wie beispielsweise Lampen, Antennen oder Bewegungsmelder zu befestigen. Mit dem genannten Geräteträger ist dies in der Regel nicht möglich. Nachteilig ist auch, dass lediglich eine Leitung durch den prismatischen Ansatz hindurchgeführt werden kann.

Der Erfindung liegt die Aufgabe zugrunde, einen Geräteträger zu schaffen, der auch für Isolationsdicken über 160 mm verwendbar ist und an dem auch vergleichsweise schwere Geräte befestigt werden können.

Die Aufgabe ist bei einem gattungsgemässen Geräteträger gemäss Anspruch 1 gelöst. Beim erfindungsgemässen Geräteträger sind das Basiselement und das Montageplatte Teile eines Hohlkastens, der wesentlich stabiler ist als der bekannte Geräteträger, bei dem die genannten Elemente mit einem vergleichsweise schmalen Teleskopträger miteinander verbunden sind. Das Aufbauelement ermöglicht eine Anpassung an unterschiedliche und insbesondere auch an grössere Dicken der Isolation. Es hat sich gezeigt, dass die Ausbildung des Geräteträgers als rechteckigen Hohlkasten die Montage der Isolation wesentlich erleichtert. Der Hohlkasten besitzt ebene und rechtwinklig zueinander stehende Aussenflächen, an welche die Isolationsplatten in einfacher Weise angefügt werden können. Die hohlkastenförmige Ausbildung des Geräteträgers erleichtert zudem die Durchführung einer Anschlussleitung. Der vergleichsweise grosse Innenraum des Geräteträgers ermöglicht zudem den Anschluss von zwei oder auch mehr Leitungen, die vollständig im Geräteträger hindurchgeführt werden können.

Nach einer Weiterbildung der Erfindung ist das Aufbauelement auf das Basiselement aufrastbar. Dies ermöglicht eine besonders einfache Montage ohne besondere Werkzeuge.

Nach einer Weiterbildung der Erfindung ist vorgesehen, dass die zweite Öffnung des Aufbauelementes im Wesentlichen der Grundfläche des Montageplattees entspricht. Dies ermöglicht eine besonders kompakte und stabile Bauweise.

Eine Anpassung an unterschiedliche Dicken der Isolation ist dann besonders einfach, wenn das Aufbauelement verkürzbar ist. Das Verkürzen ist dann besonders einfach, wenn das Aufbauelement wenigstens bereichsweise aus Segmenten hergestellt ist, die abbrechbar, abschneidbar oder abziehbar sind.

Für grössere Isolationsdicken ist vorgesehen, dass das Aufbauelement für den Anbau eines weiteren Aufbauelements vorgesehen ist. Vorzugsweise ist das Aufbauelement so ausgebildet, dass auf dieses ein zweites Aufbauelement aufrastbar ist. Für dicke Isolationsschichten werden dann zwei oder mehr Aufbauelemente miteinander verbunden.

Nach einer Weiterbildung der Erfindung ist vorgesehen, dass das Montageplatte eine Öffnung zum Ausschäumen des Geräteträgers aufweist. Durch ein solches Ausschäumen können Kältebrücken wirksam vermieden werden. Die genannte Öffnung wird nach einer Weiterbildung der Erfindung gleichzeitig zum Abnehmen des Montageplattes verwendet.

Ausführungsbeispiele der Erfindung werden nachfolgend anhand der Zeichnung näher erläutert. Es zeigen:
- Figur 1: eine räumliche Ansicht eines erfindungsgemässen Geräteträgers, wobei die einzelnen Teile auseinandergezogen sind,
- Figur 2: eine räumliche Ansicht eines montierten Geräteträgers,
- Figur 3: eine räumliche Ansicht eines geschnittenen Geräteträgers mit Wandisolation und einem zu befestigendem Gegenstand,
- Figur 4: ein Schnitt durch eine Variante eines erfindungsgemässen Geräteträgers,
- Figur 5: eine Ansicht des Geräteträger gemäss Figur 4,
- Figur 6: eine Ansicht der Rückseite des Montageplattes des Geräteträgers gemäss den Figuren 4 und 5 und
- Figur 7: eine Ansicht der Rückseite des Basiselements.

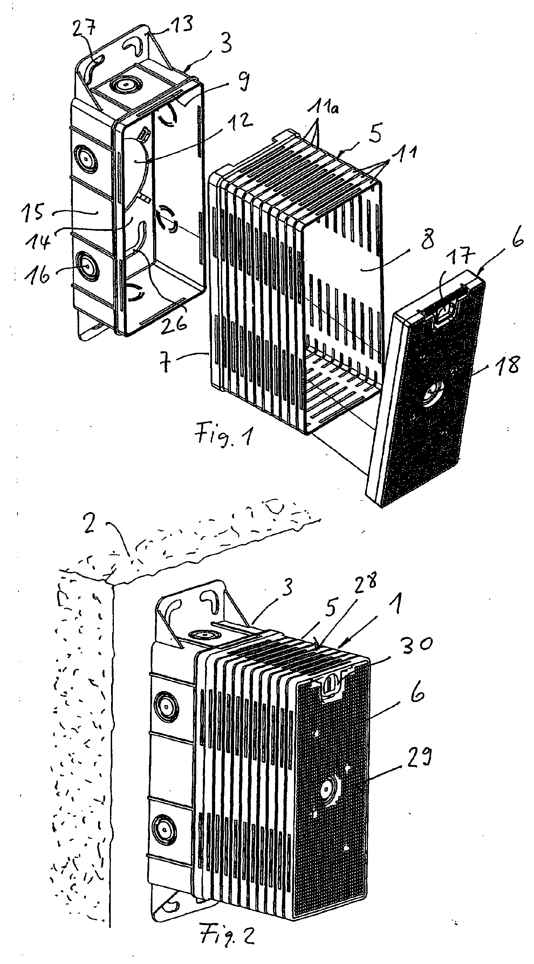

Der Geräteträger 1 besteht gemäss Figur 1 im Wesentlichen aus einem Basiselement 3, einem Aufbauelement 5 sowie einem Montageplatte 6. Die genannten Teile sind vorzugsweise aus Kunststoff im Spritzgussverfahren hergestellt. Sie können ohne Werkzeuge miteinander verbunden, insbesondere verrastet werden. Im zusammengebauten Zustand bilden das Basiselement 3, das Aufbauelement 5 und Montageplatte 6 einen ausschäumbaren Hohlkasten, der aussenseitig rechteckig ist, wie insbesondere die Figur 2 erkennen lässt. Das Montageplatte 6 bildet hierbei einen Deckel, der eine zweite Öffnung 8 des Aufbauelements 5 verschliesst. Das Basiselement 3 verschliesst eine erste Öffnung 7 des Aufbauelements 5.

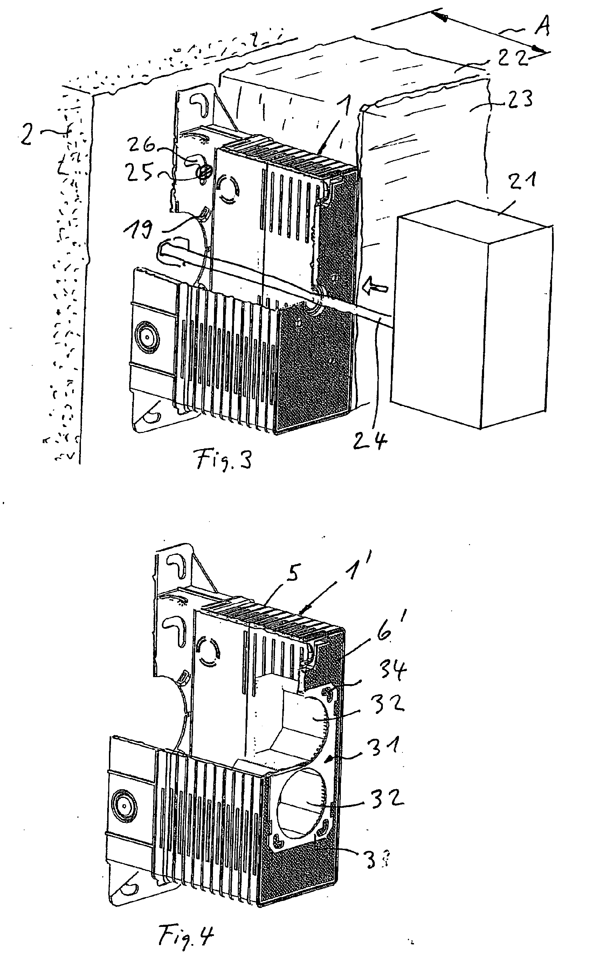

Das Basiselement 3 ist dosenförmig ausgebildet und weist einen Boden 14 auf, der eine im Wesentlichen ebene Anschlagfläche 4 sowie einen umlaufenden Rand 15 besitzt. Die Höhe des Randes 15 liegt vorzugsweise im Bereich von etwa 4 bis 8 cm. Vorzugsweise beträgt die Höhe des Randes etwa 6 cm. Im Boden 14 ist mittig eine vergleichsweise grosse Öffnung 12 eingearbeitet, durch welche eine oder mehrere Leitungen 24 hindurchgezogen werden können, wie dies in Figur 3 gezeigt ist. Zudem weist der Boden 14 mehrere Durchbrüche 26 auf, durch die Befestigungsmittel, insbesondere Dübelschrauben 25 in ein Mauerwerk 2 einsetzbar sind, wie in der Figur 3 gezeigt ist. Zur Befestigung des Basiselements 3 können zudem oben und unten vorstehende Laschen 13 mit Durchbrüchen 27 verwendet werden. Diese Laschen 13 können aber auch weggelassen werden. Für die seitliche Einführung von hier nicht gezeigten Leitungen sind im Rand 15 Ausbrechteile 16 vorgesehen, die zur Bildung eines Durchbruchs herausgebrochen werden können. Zum Aufrasten des Aufbauelements 5 weist der Rand 15 mehrere Rastrippen 9 oder ähnliche Befestigungsteile auf, die eine stabile Befestigung des Aufbauelements 5 ermöglichen. Anstelle dieser Rastrippen 9 sind auch andere Befestigungselemente denkbar. Beispielsweise können diese Rastelemente 9 durch Rastzungen oder dgl. ersetzt sein.

Das Aufbauelement 5 besitzt einen rechteckigen Grundriss und besteht aus mehreren streifenförmigen Segmenten 11, welche über umlaufende Sollbruchstellen 11a miteinander verbunden sind. Die Breite dieser Segmente 11 ist vorzugsweise einheitlich und beträgt beispielsweise 1 cm. Zur Verkürzung des Aufbauelements 5 können diese Segmente 11 von der zweiten Öffnung 8 her abgenommen, beispielsweise entlang der entsprechenden Schwächungslinie 11a abgebrochen oder abgeschnitten werden. Möglich ist auch eine Ausführung, bei welcher diese Segmente 11 abgezogen werden. Jeder Segment 11 ist mit Rastmitteln 10, beispielsweise Rastrippen versehen, welche ein Verrasten der Verankerungsplatte 6 am Aufbauelement 5 ermöglichen.

Das Aufbauelement 5 ist wie ersichtlich als rechteckige Platte ausgebildet. Für eine hindurchzuziehende Leitung besitzt das Montageplatte 6 mittig ein Ausbrechteil 18. Nach dem Ausbrechen des Teils 18 besitzt das Montageplatte 6 mittig einen Durchbruch, durch welchen eine Leitung 24 gemäss Figur 3 hindurchgezogen werden kann. Diese Leitung 24 dient für den Anschluss eines elektrischen Gerätes 21. Ein solcher elektrischer Anschluss ist jedoch nicht zwingend. Grundsätzlich kann das Gerät 21 auch ein solches sein, das keine elektrische Leitung benötigt. Das Montageplatte 6 kann zudem mehrere solche Ausbrechteile 18 aufweisen.

Das Montageplatte 6 besitzt eine Öffnung 17, die randständig angeordnet ist und die zum Ausschäumen des montierten Geräteträgers 1 vorgesehen ist. Zudem ermöglicht die Öffnung 17 den Zugang zu einer Lasche 30, an der ein Rastelement 10 angeformt ist. Diese Verrastung kann werkzeuglos gelöst werden.

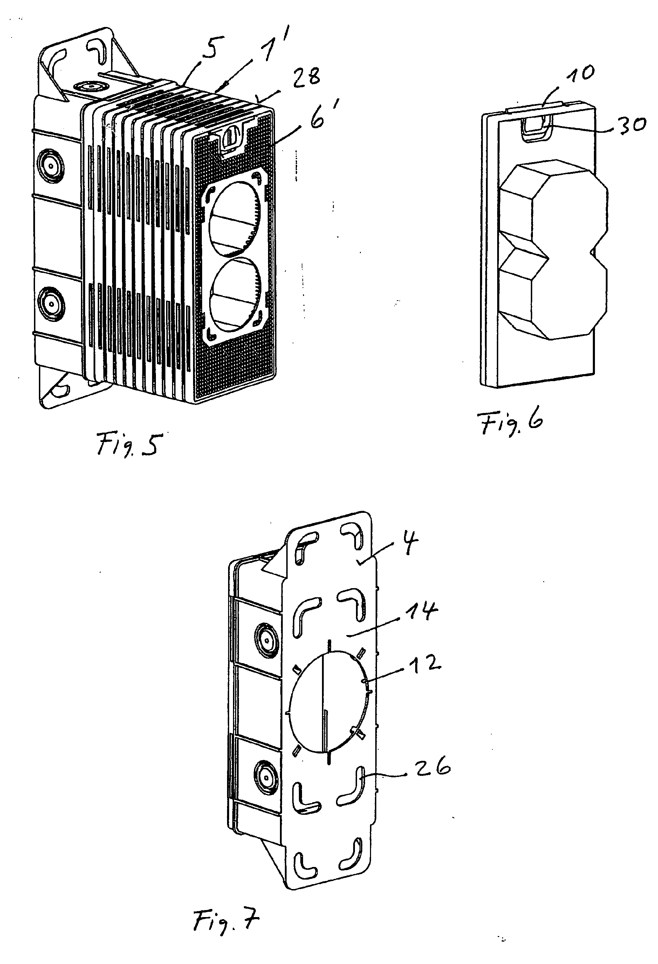

Das Montageplatte 6 ist wie ersichtlich wabenförmig ausgebildet, was die Befestigung von Holzschrauben erleichtert. Der in den Figuren 4 bis 6 gezeigte Geräteträger 1' weist ein Montageplatte 6' auf, das eine Hohldose 31 mit zwei Vertiefungen 32 aufweist, in die insbesondere jeweils hier nicht gezeigte Unterptutz-Geräte wie Schalter, Steckdosen und dgl. einbaubar sind. Zur Befestigung der Hohldose 31 weist diese einen Rand 33 mit Schlitzen 34 auf, durch die jeweils eine Schraube in das Montageplatte 6' einschraubbar ist. Die plattenförmigen Montageplatten 6 und 6' sind wahlweise auf das Aufbauelement 5 aufsetzbar und sind auch durch andere Montageplatten ersetzbar.

Nachfolgend wird die Montage des erfindungsgemässen Geräteträgers erläutert.

In einem ersten Montageschritt wird das Basiselement 3 mit Dübelschrauben 25 an einer Wand oder Decke 2 befestigt. Hierzu werden die Öffnungen 26 verwendet. Das Basiselement 13 kann hierbei gemäss Figur 2 vertikal ausgerichtet sein. Es ist hier aber auch eine Montage möglich, bei welcher das Basiselement 3 in einem anderen Winkel, beispielsweise parallel oder schräg zur Horizontalen ausgerichtet ist. Das Basiselement 3 wird so montiert, dass eine oder mehrere Leitungen 24 durch die Öffnung 12 hindurchgezogen werden können. Bei seitlichen Leitungsanschlüssen werden die entsprechenden Ausbrechteile 16 entfernt. Zur Befestigung der Leitungen 24 mit hier nicht gezeigten Kabelbindern können angeformte Laschen 19 verwendet werden oder hier nicht gezeigte im oberen Bereich des Basiselements 3 eingespitzte Querstangen verwendet werden.

Nach der Befestigung des Basiselements 3 wird wenigstens ein Aufbauelement 5 auf das Basiselement 3 aufgerastet. Bei dicken Isolationen wird auf das Aufbauelement 5 wenigstens ein hier nicht gezeigtes weiteres Aufbauelement 5 aufgerastet. Dieses weitere Aufbauelement 5 ist vorzugsweise gleich ausgebildet wie das erste Aufbauelement 5. Für Isolationen mit einer geringen Stärke werden entsprechende Segmente 11 vom ersten Aufbauelement 5 entfernt. Die in das Basiselement 3 eingezogenen Leitungen 24 werden durch den Hohlraum des Aufbauelements 5 bzw. der Aufbauelemente hindurchgezogen.

Am Montageplatte 6 wird das Ausbrechteil 18 entfernt und die Leitung 24 bzw. die Leitungen hindurchgezogen. Anschliessend wird die Montageplatte 6 oder 6' auf das Aufbauelement 5 aufgerastet. Die Rastverbindung kann nötigenfalls werkzeuglos gelöst werden.

Der Geräteträger ist nun gemäss Figur 2 montiert. Wie ersichtlich, ist die Aussenseite 28 des Geräteträgers 1 allseitig eben und ohne vorstehende Teile. Der Geräteträger 1 ist somit wie ersichtlich kompakt und ermöglicht den einfachen Anbau einer Isolation 22, die beispielsweise aus Isolationsplatten besteht. Die in Figur 3 gezeigte Tiefe A des Geräteträgers 4 entspricht der Dicke der Isolation 22, sodass die Frontseite 29 des Montageplattes 6 bündig zur Aussenseite der Isolation 22 ist.

Auf das Montageplatte 6 wird nun ein Apparat 21, beispielsweise eine Lampe, eine Antenne oder ein Bewegungsmelder befestigt, beispielsweise mit hier nicht gezeigten Schrauben aufgeschraubt. Das Montageplatte 6' kann aber alternativ auch zur Befestigung einer Dose 31, beispielsweise einer Hohlwanddose dienen. In diese in den Figuren 4 bis 6 gezeigten Dose 31 wird dann beispielsweise ein Schalter montiert. Anschliessend wird ein Verputz 23 aufgebracht, sodass der Geräteträger 1 von aussen nicht sichtbar ist. Für die Befestigung von mehreren Geräten können auch zwei oder mehr Geräteträger 1 bzw. 1' parallel nebeneinander montiert werden. Damit lassen sich beispielsweise 2er-Kombinationen von Schaltern, Steckdosen etc. horizontal montieren.

## Patentansprüche

1. Geräteträger zur Befestigung von Geräten (21) auf einer aussen isolierten Gebäudefassade oder auf einer isolierten Wand oder Decke, mit einem am Mauerwerk (2) befestigbaren Basiselement (3), das im montierten Zustand mit einer Anschlagfläche (4) gegen das Mauerwerk (2) anliegt und mit einem Träger (5), der mit dem Basiselement (3) verbunden ist und an dem ein Gerät (21) montierbar ist, **dadurch gekennzeichnet, dass** auf dem Träger (5) eine mit einer zur Anschlagfläche (4) parallelen Montagefläche (29) versehene Montageplatte (6, 6') gelagert ist, dass der Träger (5) ein rahmenförmiges Aufbauelement ist, das eine erste Öffnung (7) zur Aufnahme des Basiselements (3) und eine gegenüberliegende zweite Öffnung (8) zur Aufnahme der Montageplatte (6, 6') aufweist, wobei im montierten Zustand das Basiselement (3), das Aufbauelement (5) und die Montageplatte (6, 6') einen im Wesentlichen rechteckigen Hohlkasten bilden, wobei die Montageplatte (6, 6') mit dem Basiselement (3) verbunden und so ausgebildet ist, dass auf dieser ein Gerät (21) befestigbar ist und wobei das Basiselement (3) wenigstens einen Durchbruch (12, 26) für die Durchleitung von Leitungen (24) aufweist.

2. Geräteträger nach Anspruch 1, **dadurch gekennzeichnet, dass** das Aufbauelement (5) auf das Basiselement (3) aufrastbar ist.

3. Geräteträger nach Anspruch 1 oder 2, **dadurch gekennzeichnet, dass** die zweite Öffnung (8) im Wesentlichen der Grundfläche der Montageplatte (6, 6') entspricht.

4. Geräteträger nach einem der Ansprüche 1 bis 3, **dadurch gekennzeichnet, dass** das Aufbauelement (5) verkürzbar und/oder anbaubar ist.

5. Geräteträger nach einem der Ansprüche 1 bis 4, **dadurch gekennzeichnet, dass** das Aufbauelement (5) abbrechbare, abschneidbare oder abziehbare Segmente (11) aufweist.

6. Geräteträger nach einem der Ansprüche 1 bis 5, **dadurch gekennzeichnet, dass** das Basiselement (3) schachtelförmig ausgebildet ist und in einer Bodenwandung (14) wenigstens einen Durchbruch (12) für die Durchleitung von Leitungen (24) aufweist.

7. Geräteträger nach einem der Ansprüche 1 bis 6, **dadurch gekennzeichnet, dass** die Montageplatte (6, 6') eine Öffnung (17) zum Ausschäumen des Geräteträgers (1) aufweist.

8. Geräteträger nach einem der Ansprüche 1 bis 7, **dadurch gekennzeichnet, dass** die Montageplatte (6, 6') auf das Aufbauelement (5) aufrastbar ist.

9. Geräteträger nach Anspruch 8, **dadurch gekennzeichnet, dass** das Montageplatte (6, 6') eine Öffnung (17) aufweist, durch die hindurch eine Verrastung zwischen der Montageplatte (6, 6') und dem Aufbauelement (5) werkzeuglos lösbar ist.

10. Geräteträger nach einem der Ansprüche 1 bis 9, **dadurch gekennzeichnet, dass** die Montageplatte (6, 6') wenigstens ein vorzugsweise mittig angeordnetes Ausbrechteil (18) und vorzugsweise weitere Ausbrechteile (18) aufweist.

## Claims

1. Device carrier for fastening devices (21) on an externally insulated building facade or on an insulated wall or ceiling, comprising a base element (3) which can be fastened to the masonry (2) and which, in the mounted state, bears by way of an abutment surface (4) against the masonry (2), and comprising a carrier (5) which is connected to the base element (3) and on which a device (21) can be mounted, **characterized in that** a mounting plate (6, 6') provided with a mounting surface (29) parallel to the abutment surface (4) is mounted on the carrier (5), **in that** the carrier (5) is a frame-shaped add-on element which has a first opening (7) for accommodating the base element (3) and a second opening (8), opposite the first, for accommodating the mounting plate (6, 6'), wherein, in the mounted state, the base element (3), the add-on element (5) and the mounting plate (6, 6') form a substantially rectangular hollow box, wherein the mounting plate (6, 6') is connected to the base element (3) and is designed such that a device (21) can be fastened on it, and wherein the base element (3) has at least one perforation (12, 26) for passing through lines (24).

2. Device carrier according to Claim 1, **characterized in that** the add-on element (5) can be latched onto the base element (3).

3. Device carrier according to Claim 1 or 2, **characterized in that** the second opening (8) substantially corresponds to the base area of the mounting plate (6, 6').

4. Device carrier according to one of Claims 1 to 3, **characterized in that** the add-on element (5) can be shortened and/or built on to.

5. Device carrier according to one of Claims 1 to 4, **characterized in that** the add-on element (5) has segments (11) which can be broken off, cut off or pulled off.

6. Device carrier according to one of Claims 1 to 5, **characterized in that** the base element (3) is designed in the form of a case and has, in a bottom wall (14), at least one perforation (12) for passing through lines (24).

7. Device carrier according to one of Claims 1 to 6, **characterized in that** the mounting plate (6, 6') has an opening (17) for filling the device carrier (1) with foam.

8. Device carrier according to one of Claims 1 to 7, **characterized in that** the mounting plate (6, 6') can be latched onto the add-on element (5).

9. Device carrier according to Claim 8, **characterized in that** the mounting plate (6, 6') has an opening (17) through which a latching engagement between the mounting plate (6, 6') and the add-on element (5) can be released without the use of tools.

10. Device carrier according to one of Claims 1 to 9, **characterized in that** the mounting plate (6, 6') has at least one knockout part (18), preferably arranged centrally, and preferably further knockout parts (18).

## Revendications

1. Support d'appareil pour la fixation d'appareils (21) sur une façade de bâtiment isolée à l'extérieur, ou sur un mur ou un plafond isolé, comprenant un élément de base (3) pouvant être fixé à la maçonnerie (2), qui s'applique dans l'état monté avec une surface de butée (4) contre la maçonnerie (2) et comprenant un support (5), qui est connecté à l'élément de base (3) et sur lequel peut être monté un appareil (21), **caractérisé en ce qu'**une plaque de montage (6, 6') pourvue d'une surface de montage (29) parallèle à la surface de butée (4) est montée sur le support (5), **en ce que** le support (5) est un élément de construction en forme de cadre, qui présente une première ouverture (7) pour recevoir l'élément de base (3) et une deuxième ouverture (8) opposée pour recevoir la plaque de montage (6, 6'), l'élément de base (3), l'élément de construction (5) et la plaque de montage (6, 6') formant, dans l'état monté, une caisse creuse essentiellement rectangulaire, la plaque de montage (6, 6') étant connectée à l'élément de base (3) et étant réalisée de telle sorte qu'un appareil (21) puisse être fixé sur elle, l'élément de base (3) présentant au moins un orifice (12, 26) pour le passage de conduites (24).

2. Support d'appareil selon la revendication 1, **caractérisé en ce que** l'élément de construction (5) peut être encliqueté sur l'élément de base (3).

3. Support d'appareil selon la revendication 1 ou 2, **caractérisé en ce que** la deuxième ouverture (8) correspond essentiellement à la surface de base de la plaque de montage (6, 6').

4. Support d'appareil selon l'une quelconque des revendications 1 à 3, **caractérisé en ce que** l'élément de construction (5) peut être raccourci et/ou rapporté.

5. Support d'appareil selon l'une quelconque des revendications 1 à 4, **caractérisé en ce que** l'élément de construction (5) présente des segments cassables, sectionnables ou arrachables (11).

6. Support d'appareil selon l'une quelconque des revendications 1 à 5, **caractérisé en ce que** l'élément de base (3) est réalisé en forme de boîte et présente, dans une paroi de fond (14), au moins un orifice (12) pour le passage de conduites (24).

7. Support d'appareil selon l'une quelconque des revendications 1 à 6, **caractérisé en ce que** la plaque de montage (6, 6') présente une ouverture (17) pour le moussage du support d'appareil (1).

8. Support d'appareil selon l'une quelconque des revendications 1 à 7, **caractérisé en ce que** la plaque de montage (6, 6') peut être encliquetée sur l'élément de construction (5).

9. Support d'appareil selon la revendication 8, **caractérisé en ce que** la plaque de montage (6, 6') présente une ouverture (17) à travers laquelle un encliquetage entre la plaque de montage (6, 6') et l'élément de construction (5) peut être desserré sans outil.

10. Support d'appareil selon l'une quelconque des revendications 1 à 9, **caractérisé en ce que** la plaque de montage (6, 6') présente au moins une partie cassable (18) disposée de préférence au centre, et de préférence d'autres parties cassables (18).
